# EUROPEAN PATENT APPLICATION

(11) **EP 3 675 407 A1**
(43) Date of publication of application: **01.07.2020**
(21) Application number: 18868468.2
(22) Date of filing: 19.10.2018
(51) Int. Cl.: H04L 5/00

(54) **METHOD AND DEVICE FOR CONFIGURING PRB GRID IN WIRELESS COMMUNICATION SYSTEM**

(30) Priority: 19.10.2017 US 201762574692 P
(71) Applicant: LG Electronics Inc., Seoul 07336 (KR)
(72) Inventor: YI, Yunjung, Seoul 06772 (KR)
(74) Representative: Katérle, Axel
(86) International application number: PCT/KR2018/012427
(87) International publication number: WO 2019/078678

(57) **Abstract**

Provided are a method and device for configuring a physical resource block (PRB) grid in a wireless communication system. A user equipment (UE) receives, from a network, information on a first PRB of a carrier and configures a PRB grid from the first PRB of the carrier. The information on the first PRB of the carrier may include information on an offset with PRB 0.

## Description

### TECHNICAL FIELD

The present disclosure relates to wireless communication, and more particularly, to a method and apparatus for configuring a physical resource block (PRB) grid in a wireless communication system, particularly, new radio access technology (NR).

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

NR is technology that operates on a much wider bandwidth than LTE and has the following design principles different from that of LTE in terms of broadband support in order to support a flexible broadband operation method.
- A capability of a bandwidth supported by a network and a user equipment (UE) may be different.
- Bandwidth capabilities of a downlink and an uplink supported by the UE may be different.
- Capabilities of bandwidths supported by each UE may be different, and thus UEs supporting different bandwidths may coexist in one network frequency band.
- In order to reduce power consumption of the UE, a bandwidth configured by the UE may be set differently according to a traffic load state of the UE.

In order to satisfy the above design principles, NR newly introduced the concept of a bandwidth part (BWP) in addition to carrier aggregation (CA) of the existing LTE.

### SUMMARY

Due to the nature of a newly introduced BWP in NR, different issues may arise in various scenarios. The present disclosure discusses issues that may arise in order to efficiently perform a BWP operation in NR carriers.

In an aspect, a method for a user equipment (UE) to configure a physical resource block (PRB) grid in a wireless communication system is provided. The method includes receiving information on a first PRB of a carrier from a network, and configuring the PRB grid from the first PRB of the carrier.

In another aspect, a user equipment (UE) in a wireless communication system is provided. The UE includes a memory, a transceiver, and a processor connected to the memory and the transceiver. The processor is configured to receive information on a first PRB of a carrier from a network, and configure the PRB grid from the first PRB of the carrier.

The UE can effectively know a carrier configured therefor and thus configure a PRB grid.

### BRIEF DESCRIPTION OF THE DRAWINGS

FIG. 1 shows an example of a wireless communication system to which technical features of the present disclosure can be applied.
FIG. 2 shows another example of a wireless communication system to which technical features of the present disclosure can be applied.
FIG. 3 shows an example of a frame structure to which technical features of the present disclosure can be applied.
FIG. 4 shows another example of a frame structure to which technical features of the present disclosure can be applied.
FIG. 5 shows an example of a resource grid to which technical features of the present disclosure can be applied.
FIG. 6 shows an example of a synchronization channel to which technical features of the present disclosure can be applied.
FIG. 7 shows an example of a frequency allocation scheme to which technical features of the present disclosure can be applied.
FIG. 8 shows an example of multiple BWPs to which technical features of the present disclosure can be applied.
FIG. 9 shows an offset between a PRB 0 and a carrier according to an embodiment of the present disclosure.
FIG. 10 shows an example of a configuration of a duplex gap according to an embodiment of the present disclosure.
FIG. 11 shows a method for a UE to configure a PRB grid according to an embodiment of the present disclosure.
FIG. 12 shows a UE in which an embodiment of the present disclosure is implemented.
FIG. 13 shows a method for a BS and a UE to operate according to an embodiment of the present disclosure.
FIG. 14 shows a BS in which an embodiment of the present disclosure is implemented.

### DETAILED DESCRIPTION

The technical features described below may be used by a communication standard by the 3rd generation partnership project (3GPP) standardization organization, a communication standard by the institute of electrical and electronics engineers (IEEE), etc. For example, the communication standards by the 3GPP standardization organization include long-term evolution (LTE) and/or evolution of LTE systems. The evolution of LTE systems includes LTE-advanced (LTE-A), LTE-A Pro, and/or 5G new radio (NR). The communication standard by the IEEE standardization organization includes a wireless local area network (WLAN) system such as IEEE 802.11a/b/g/n/ac/ax. The above system uses various multiple access technologies such as orthogonal frequency division multiple access (OFDMA) and/or single carrier frequency division multiple access (SC-FDMA) for downlink (DL) and/or uplink (DL). For example, only OFDMA may be used for DL and only SC-FDMA may be used for UL. Alternatively, OFDMA and SC-FDMA may be used for DL and/or UL.

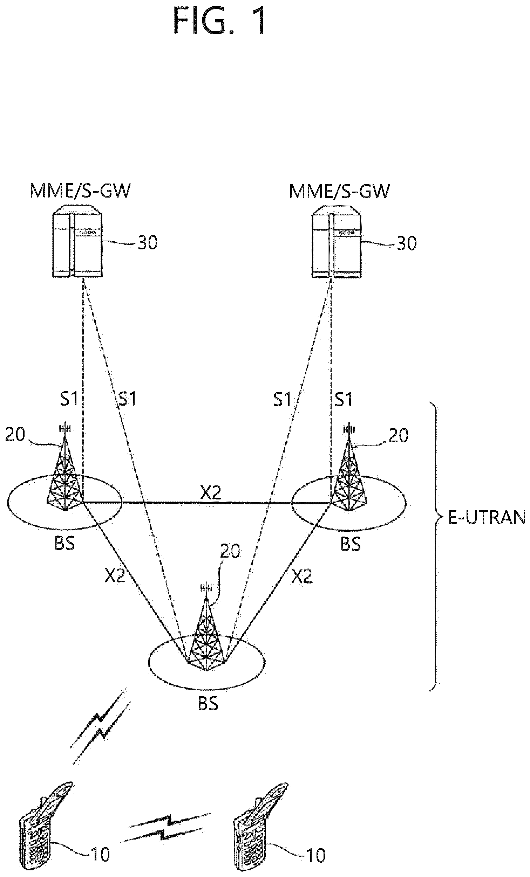

FIG. 1 shows an example of a wireless communication system to which technical features of the present disclosure can be applied. Specifically, FIG. 1 shows a system architecture based on an evolved-UMTS terrestrial radio access network (E-UTRAN). The aforementioned LTE is a part of an evolved-UTMS (e-UMTS) using the E-UTRAN.

Referring to FIG. 1, the wireless communication system includes one or more user equipment (UE; 10), an E-UTRAN and an evolved packet core (EPC). The UE 10 refers to a communication equipment carried by a user. The UE 10 may be fixed or mobile. The UE 10 may be referred to as another terminology, such as a mobile station (MS), a user terminal (UT), a subscriber station (SS), a wireless device, etc.

The E-UTRAN consists of one or more base station (BS) 20. The BS 20 provides the E-UTRA user plane and control plane protocol terminations towards the UE 10. The BS 20 is generally a fixed station that communicates with the UE 10. The BS 20 hosts the functions, such as inter-cell radio resource management (RRM), radio bearer (RB) control, connection mobility control, radio admission control, measurement configuration/provision, dynamic resource allocation (scheduler), etc. The BS may be referred to as another terminology, such as an evolved NodeB (eNB), a base transceiver system (BTS), an access point (AP), etc.

A downlink (DL) denotes communication from the BS 20 to the UE 10. An uplink (UL) denotes communication from the UE 10 to the BS 20. A sidelink (SL) denotes communication between the UEs 10. In the DL, a transmitter may be a part of the BS 20, and a receiver may be a part of the UE 10. In the UL, the transmitter may be a part of the UE 10, and the receiver may be a part of the BS 20. In the SL, the transmitter and receiver may be a part of the UE 10.

The EPC includes a mobility management entity (MME), a serving gateway (S-GW) and a packet data network (PDN) gateway (P-GW). The MME hosts the functions, such as non-access stratum (NAS) security, idle state mobility handling, evolved packet system (EPS) bearer control, etc. The S-GW hosts the functions, such as mobility anchoring, etc. The S-GW is a gateway having an E-UTRAN as an endpoint. For convenience, MME/S-GW 30 will be referred to herein simply as a "gateway," but it is understood that this entity includes both the MME and S-GW. The P-GW hosts the functions, such as UE Internet protocol (IP) address allocation, packet filtering, etc. The P-GW is a gateway having a PDN as an endpoint. The P-GW is connected to an external network.

The UE 10 is connected to the BS 20 by means of the Uu interface. The UEs 10 are interconnected with each other by means of the PC5 interface. The BSs 20 are interconnected with each other by means of the X2 interface. The BSs 20 are also connected by means of the S1 interface to the EPC, more specifically to the MME by means of the S1-MME interface and to the S-GW by means of the S1-U interface. The S1 interface supports a many-to-many relation between MMEs/S-GWs and BSs.

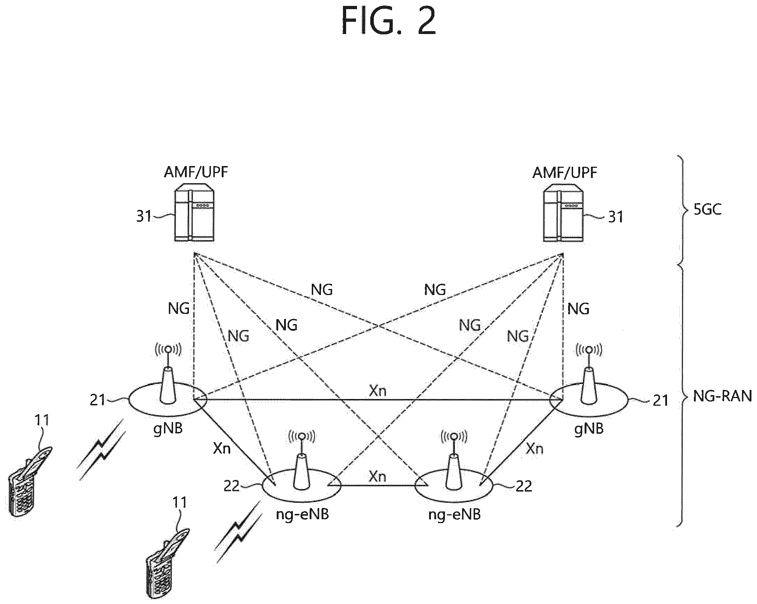

FIG. 2 shows another example of a wireless communication system to which technical features of the present disclosure can be applied. Specifically, FIG. 2 shows a system architecture based on a 5G new radio access technology (NR) system. The entity used in the 5G NR system (hereinafter, simply referred to as "NR") may absorb some or all of the functions of the entities introduced in FIG. 1 (e.g., eNB, MME, S-GW). The entity used in the NR system may be identified by the name "NG" for distinction from the LTE.

Referring to FIG. 2, the wireless communication system includes one or more UE 11, a next-generation RAN (NG-RAN) and a 5th generation core network (5GC). The NG-RAN consists of at least one NG-RAN node. The NG-RAN node is an entity corresponding to the BS 20 shown in FIG. 1. The NG-RAN node consists of at least one gNB 21 and/or at least one ng-eNB 22. The gNB 21 provides NR user plane and control plane protocol terminations towards the UE 11. The ng-eNB 22 provides E-UTRA user plane and control plane protocol terminations towards the UE 11.

The 5GC includes an access and mobility management function (AMF), a user plane function (UPF) and a session management function (SMF). The AMF hosts the functions, such as NAS security, idle state mobility handling, etc. The AMF is an entity including the functions of the conventional MME. The UPF hosts the functions, such as mobility anchoring, protocol data unit (PDU) handling. The UPF an entity including the functions of the conventional S-GW. The SMF hosts the functions, such as UE IP address allocation, PDU session control.

The gNBs and ng-eNBs are interconnected with each other by means of the Xn interface. The gNBs and ng-eNBs are also connected by means of the NG interfaces to the 5GC, more specifically to the AMF by means of the NG-C interface and to the UPF by means of the NG-U interface.

A structure of a radio frame in NR is described. In LTE/LTE-A, one radio frame consists of 10 subframes, and one subframe consists of 2 slots. A length of one subframe may be 1ms, and a length of one slot may be 0.5ms. Time for transmitting one transport block by higher layer to physical layer (generally over one subframe) is defined as a transmission time interval (TTI). A TTI may be the minimum unit of scheduling.

Unlike LTE/LTE-A, NR supports various numerologies, and accordingly, the structure of the radio frame may be varied. NR supports multiple subcarrier spacings in frequency domain. Table 1 shows multiple numerologies supported in NR. Each numerology may be identified by index µ.

**[Table 1]**

| µ | Sub carrier spacing (kHz) | Cyclic prefix | Supported for data | Supported for synchronization |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

Referring to Table 1, a subcarrier spacing may be set to any one of 15, 30, 60, 120, and 240 kHz, which is identified by index µ. However, subcarrier spacings shown in Table 1 are merely exemplary, and specific subcarrier spacings may be changed. Therefore, each subcarrier spacing (e.g., µ=0,1...4) may be represented as a first subcarrier spacing, a second subcarrier spacing...Nth subcarrier spacing. Referring to Table 1, transmission of user data (e.g., physical uplink shared channel (PUSCH), physical downlink shared channel (PDSCH)) may not be supported depending on the subcarrier spacing. That is, transmission of user data may not be supported only in at least one specific subcarrier spacing (e.g., 240 kHz).

In addition, referring to Table 1, a synchronization channel (e.g., a primary synchronization signal (PSS), a secondary synchronization signal (SSS), a physical broadcast channel (PBCH)) may not be supported depending on the subcarrier spacing. That is, the synchronization channel may not be supported only in at least one specific subcarrier spacing (e.g., 60 kHz).

In NR, a number of slots and a number of symbols included in one radio frame/subframe may be different according to various numerologies, i.e., various subcarrier spacings. Table 2 shows an example of a number of OFDM symbols per slot, slots per radio frame, and slots per subframe for normal cyclic prefix (CP).

**[Table 2]**

| µ | Number of symbols per slot | Number of slots per radio frame | Number of slots per subframe |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

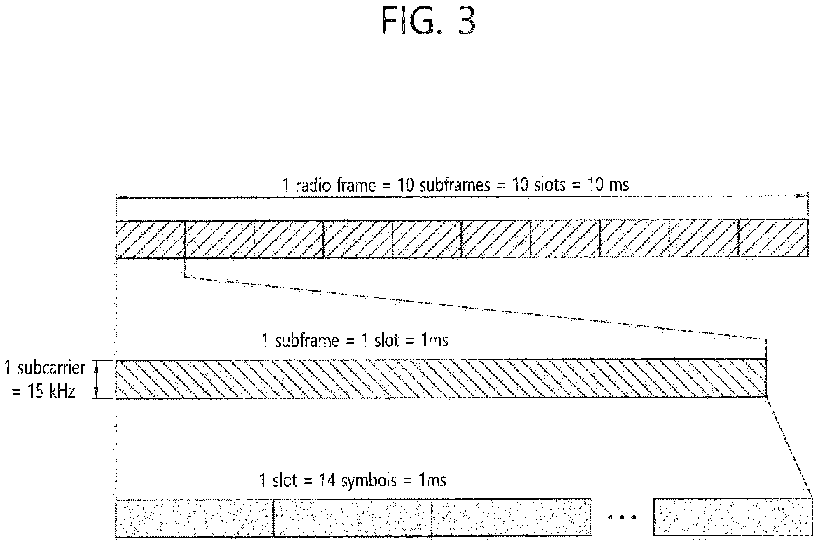

Referring to Table 2, when a first numerology corresponding to µ=0 is applied, one radio frame includes 10 subframes, one subframe corresponds to one slot, and one slot consists of 14 symbols. In the present disclosure, a symbol refers to a signal transmitted during a specific time interval. For example, a symbol may refer to a signal generated by OFDM processing. That is, a symbol in the present disclosure may refer to an OFDM/OFDMA symbol, or SC-FDMA symbol, etc. A CP may be located between each symbol. FIG. 3 shows an example of a frame structure to which technical features of the present disclosure can be applied. In FIG. 3, a subcarrier spacing is 15 kHz, which corresponds to µ=0.

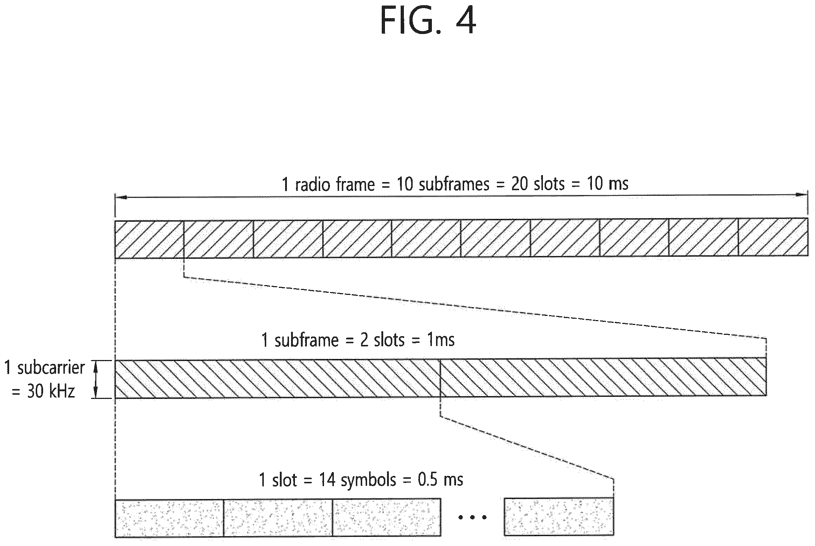

FIG. 4 shows another example of a frame structure to which technical features of the present disclosure can be applied. In FIG. 4, a subcarrier spacing is 30 kHz, which corresponds to µ=1.

Meanwhile, a frequency division duplex (FDD) and/or a time division duplex (TDD) may be applied to a wireless communication system to which embodiments of the present disclosure is applied. When TDD is applied, in LTE/LTE-A, UL subframes and DL subframes are allocated in units of subframes.

In NR, symbols in a slot may be classified as a DL symbol (denoted by D), a flexible symbol (denoted by X), and a UL symbol (denoted by U). In a slot in a DL frame, the UE shall assume that DL transmissions only occur in DL symbols or flexible symbols. In a slot in an UL frame, the UE shall only transmit in UL symbols or flexible symbols.

Table 3 shows an example of a slot format which is identified by a corresponding format index. The contents of the Table 3 may be commonly applied to a specific cell, or may be commonly applied to adjacent cells, or may be applied individually or differently to each UE.

**[Table 3]**

| Format | Symbol number in a slot | | | | | | | | | | | | | |
|---|---|---|---|---|---|---|---|---|---|---|---|---|---|---|
| | 0 | 1 | 1 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | X | X | X | X | X | X | X | X | X | X | X | X | X | X |
| 3 | D | D | D | D | D | D | D | D | D | D | D | D | D | X |
| ... | | | | | | | | | | | | | | |

For convenience of explanation, Table 3 shows only a part of the slot format actually defined in NR. The specific allocation scheme may be changed or added. The UE may receive a slot format configuration via a higher layer signaling (i.e., radio resource control (RRC) signaling). Or, the UE may receive a slot format configuration via downlink control information (DCI) which is received on PDCCH. Or, the UE may receive a slot format configuration via combination of higher layer signaling and DCI.

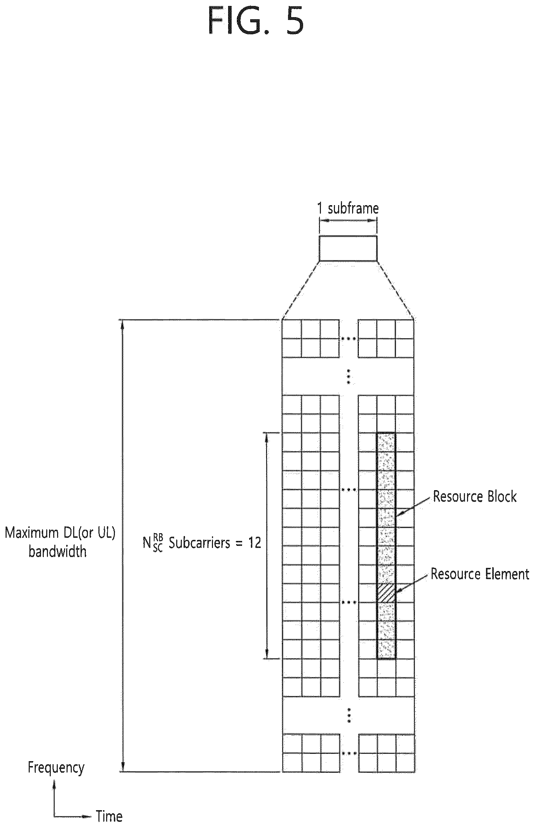

FIG. 5 shows an example of a resource grid to which technical features of the present disclosure can be applied. An example shown in FIG. 5 is a time-frequency resource grid used in NR. An example shown in FIG. 5 may be applied to UL and/or DL. Referring to FIG. 5, multiple slots are included within one subframe on the time domain. Specifically, when expressed according to the value of "µ", "14·2µ" symbols may be expressed in the resource grid. Also, one resource block (RB) may occupy 12 consecutive subcarriers. One RB may be referred to as a physical resource block (PRB), and 12 resource elements (REs) may be included in each PRB. The number of allocatable RBs may be determined based on a minimum value and a maximum value. The number of allocatable RBs may be configured individually according to the numerology ("µ"). The number of allocatable RBs may be configured to the same value for UL and DL, or may be configured to different values for UL and DL.

A cell search scheme in NR is described. The UE may perform cell search in order to acquire time and/or frequency synchronization with a cell and to acquire a cell identifier (ID). Synchronization channels such as PSS, SSS, and PBCH may be used for cell search.

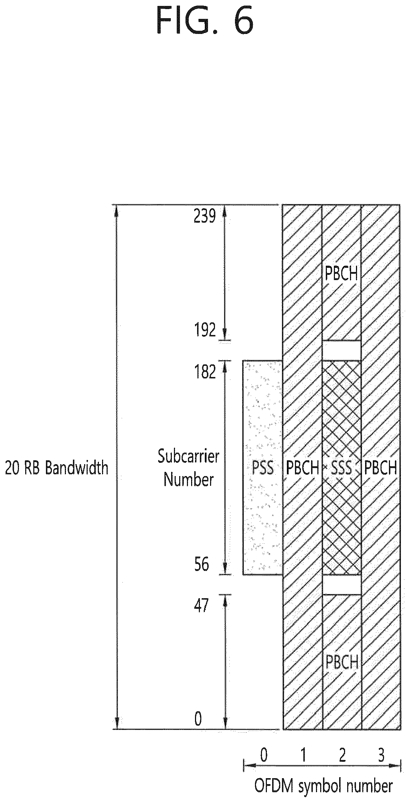

FIG. 6 shows an example of a synchronization channel to which technical features of the present disclosure can be applied. Referring to FIG. 6, the PSS and SSS may include one symbol and 127 subcarriers. The PBCH may include 3 symbols and 240 subcarriers.

The PSS is used for synchronization signal/PBCH block symbol timing acquisition. The PSS indicates 3 hypotheses for cell ID identification. The SSS is used for cell ID identification. The SSS indicates 336 hypotheses. Consequently, 1008 physical layer cell IDs may be configured by the PSS and the SSS.

The SS/PBCH block may be repeatedly transmitted according to a predetermined pattern within the 5ms window. For example, when L SS/PBCH blocks are transmitted, all of SS/PBCH block #1 through SS/PBCH block #L may contain the same information, but may be transmitted through beams in different directions. That is, quasi co-located (QCL) relationship may not be applied to the SS/PBCH blocks within the 5ms window. The beams used to receive the SS/PBCH block may be used in subsequent operations between the UE and the network (e.g., random access operations). The SS/PBCH block may be repeated by a specific period. The repetition period may be configured individually according to the numerology.

Referring to FIG. 6, the PBCH has a bandwidth of 20 RBs for the 2nd/4th symbols and 8 RBs for the 3rd symbol. The PBCH includes a demodulation reference signal (DM-RS) for decoding the PBCH. The frequency domain for the DM-RS is determined according to the cell ID. Unlike LTE/LTE-A, since a cell-specific reference signal (CRS) is not defined in NR, a special DM-RS is defined for decoding the PBCH (i.e., PBCH-DMRS). The PBCH-DMRS may contain information indicating an SS/PBCH block index.

The PBCH performs various functions. For example, the PBCH may perform a function of broadcasting a master information block (MIB). System information (SI) is divided into a minimum SI and other SI. The minimum SI may be divided into MIB and system information block type-1 (SIB1). The minimum SI excluding the MIB may be referred to as a remaining minimum SI (RMSI). That is, the RMSI may refer to the SIB1.

The MIB includes information necessary for decoding SIB1. For example, the MIB may include information on a subcarrier spacing applied to SIB1 (and MSG 2/4 used in the random access procedure, other SI), information on a frequency offset between the SSB block and the subsequently transmitted RB, information on a bandwidth of the PDCCH/SIB, and information for decoding the PDCCH (e.g., information on search-space/control resource set (CORESET)/DM-RS, etc., which will be described later). The MIB may be periodically transmitted, and the same information may be repeatedly transmitted during 80ms time interval. The SIB1 may be repeatedly transmitted through the PDSCH. The SIB1 includes control information for initial access of the UE and information for decoding another SIB.

PDCCH decoding in NR is described. The search space for the PDCCH corresponds to an area in which the UE performs blind decoding on the PDCCH. In LTE/LTE-A, the search space for the PDCCH is divided into a common search space (CSS) and a UE-specific search space (USS). The size of each search space and/or the size of a control channel element (CCE) included in the PDCCH are determined according to the PDCCH format.

In NR, a resource-element group (REG) and a CCE for the PDCCH are defined. In NR, the concept of CORESET is defined. Specifically, one REG corresponds to 12 REs, i.e., one RB transmitted through one OFDM symbol. Each REG includes a DM-RS. One CCE includes a plurality of REGs (e.g., 6 REGs). The PDCCH maybe transmitted through a resource consisting of 1, 2, 4, 8, or 16 CCEs. The number of CCEs may be determined according to the aggregation level. That is, one CCE when the aggregation level is 1, 2 CCEs when the aggregation level is 2, 4 CCEs when the aggregation level is 4, 8 CCEs when the aggregation level is 8, 16 CCEs when the aggregation level is 16, may be included in the PDCCH for a specific UE.

The CORESET may be defined on 1/2/3 OFDM symbols and multiple RBs. In LTE/LTE-A, the number of symbols used for the PDCCH is defined by a physical control format indicator channel (PCFICH). However, the PCFICH is not used in NR. Instead, the number of symbols used for the CORESET may be defined by the RRC message (and/or PBCH/SIB1). Also, in LTE/LTE-A, since the frequency bandwidth of the PDCCH is the same as the entire system bandwidth, so there is no signaling regarding the frequency bandwidth of the PDCCH. In NR, the frequency domain of the CORESET may be defined by the RRC message (and/or PBCH/SIB1) in a unit of RB.

In NR, the search space for the PDCCH is divided into CSS and USS. Since the USS may be indicated by the RRC message, an RRC connection may be required for the UE to decode the USS. The USS may include control information for PDSCH decoding assigned to the UE.

Since the PDCCH needs to be decoded even when the RRC configuration is not completed, CSS should also be defined. For example, CSS may be defined when a PDCCH for decoding a PDSCH that conveys SIB1 is configured or when a PDCCH for receiving MSG 2/4 is configured in a random access procedure. Like LTE/LTE-A, in NR, the PDCCH may be scrambled by a radio network temporary identifier (RNTI) for a specific purpose.

A resource allocation scheme in NR is described. In NR, a specific number (e.g., up to 4) of bandwidth parts (BWPs) may be defined. A BWP (or carrier BWP) is a set of consecutive PRBs, and may be represented by a consecutive subsets of common RBs (CRBs). Each RB in the CRB may be represented by CRB1, CRB2, etc., beginning with CRBO.

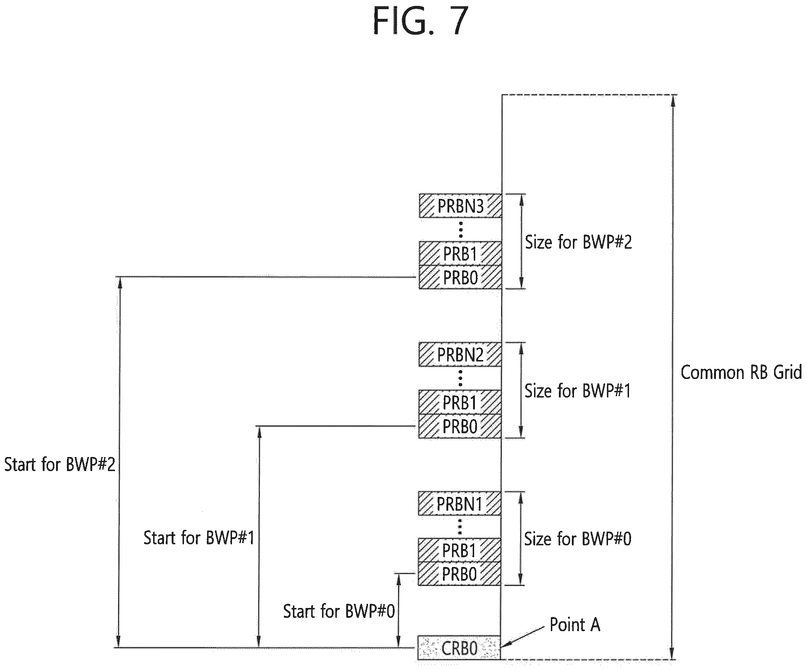

FIG. 7 shows an example of a frequency allocation scheme to which technical features of the present disclosure can be applied. Referring to FIG. 7, multiple BWPs may be defined in the CRB grid. A reference point of the CRB grid (which may be referred to as a common reference point, a starting point, etc.) is referred to as so-called "point A" in NR. The point A is indicated by the RMSI (i.e., SIB1). Specifically, the frequency offset between the frequency band in which the SSB block is transmitted and the point A may be indicated through the RMSI. The point A corresponds to the center frequency of the CRBO. Further, the point A may be a point at which the variable "k" indicating the frequency band of the RE is set to zero in NR. The multiple BWPs shown in FIG. 7 is configured to one cell (e.g., primary cell (PCell)). A plurality of BWPs may be configured for each cell individually or commonly.

Referring to FIG. 7, each BWP may be defined by a size and starting point from CRBO. For example, the first BWP, i.e., BWP #0, may be defined by a starting point through an offset from CRB0, and a size of the BWP #0 may be determined through the size for BWP #0.

A specific number (e.g., up to four) of BWPs may be configured for the UE. At a specific time point, only a specific number (e.g., one) of BWPs maybe active per cell. The number of configurable BWPs or the number of activated BWPs may be configured commonly or individually for UL and DL. The UE can receive PDSCH, PDCCH and/or channel state information (CSI) RS only on the active DL BWP. Also, the UE can transmit PUSCH and/or physical uplink control channel (PUCCH) only on the active UL BWP.

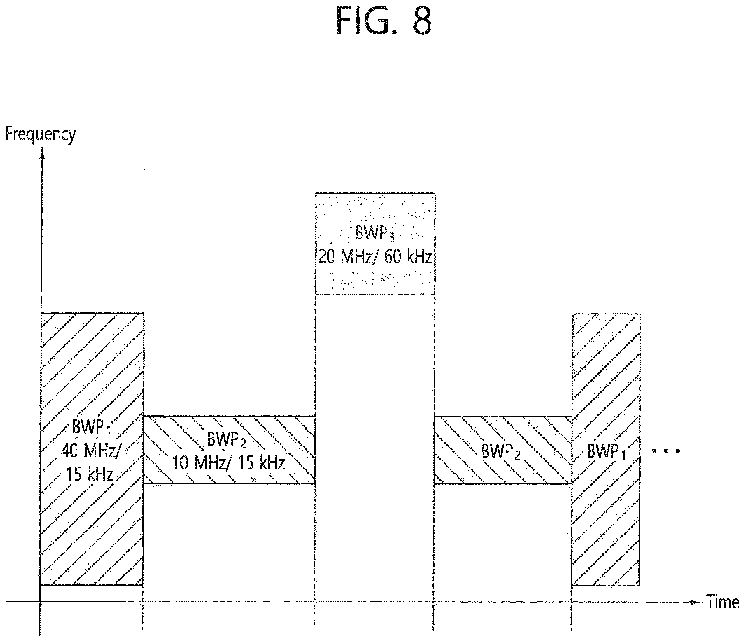

FIG. 8 shows an example of multiple BWPs to which technical features of the present disclosure can be applied. Referring to FIG. 8, 3 BWPs may be configured. The first BWP may span 40 MHz band, and a subcarrier spacing of 15 kHz may be applied. The second BWP may span 10 MHz band, and a subcarrier spacing of 15 kHz may be applied. The third BWP may span 20 MHz band and a subcarrier spacing of 60 kHz may be applied. The UE may configure at least one BWP among the 3 BWPs as an active BWP, and may perform UL and/or DL data communication via the active BWP.

A time resource may be indicated in a manner that indicates a time difference/offset based on a transmission time point of a PDCCH allocating DL or UL resources. For example, the start point of the PDSCH/PUSCH corresponding to the PDCCH and the number of symbols occupied by the PDSCH / PUSCH may be indicated.

Carrier aggregation (CA) is described. Like LTE/LTE-A, CA can be supported in NR. That is, it is possible to aggregate continuous or discontinuous component carriers (CCs) to increase the bandwidth and consequently increase the bit rate. Each CC may correspond to a (serving) cell, and each CC/cell may be divided into a primary serving cell (PSC)/primary CC (PCC) or a secondary serving cell (SSC)/secondary CC (SCC).

With regard to a BWP operation, the following issues may arise, especially in the initial DL BWP.
- Issue 1: UE minimum bandwidth
- Issue 2: Handover
- Issue 3: PRB grid configuration

Spectrum and/or situation in which Issue 1 to Issue 3 may occur are illustrated in Table 4.

**[Table 4]**

| Paired PCell | Unpaired PCell | SCell (secondary cell) | Unpaired SCell | Paired PSCell (primary SCell) | Unpaired PSCell |
|---|---|---|---|---|---|
| Issues 1 and 2 | Issues 1 and 2 | Issue 3 | Issue 3 | Issues 1, 2, and 3 | Issues 1, 2, and 3 |

In Table 4, paired means a paired spectrum, and the paired spectrum indicates a band in which a carrier of DL and a carrier of UL are paired with each other. In the case of a paired spectrum, unpaired in Table 4 means an unpaired spectrum, and the unpaired spectrum indicates a band in which a carrier of DL and a carrier of UL are included in one band. Hereinafter, a method of performing a BWP operation suggested in the present disclosure will be described. According to an embodiment of the present disclosure to be described below, the present disclosure seeks to solve the above-mentioned issues 1 to 3. Unless otherwise indicated below, each issue and/or solution for the issue may be applied to different cells (PCell, Scell, and/or PSCell). Further, each issue and/or solution to the issue may be applied to DL and/or UL.

### 1. UE minimum bandwidth

In order not to too much limit an RMSI CORESET and/or an RMSI data portion, the initial DL BWP may only be regarded as an RMSI bandwidth. However, for UEs supporting bandwidths wider than the RMSI bandwidth and/or UEs having a UE minimum bandwidth wider than a configured RMSI bandwidth, the UE may simultaneously monitor the RMSI bandwidth (i.e., initial DL BWP) and SS/PBCH blocks. This may be performed based on a UE capability for the UE minimum bandwidth (hereafter, UE minimum bandwidth capability). However, in the unpaired spectrum, the entire bandwidth of the initial DL BWP and the initial UL BWP may be less than or equal to the UE minimum bandwidth. When there are different UE types having different UE minimum bandwidth capabilities, a plurality of UL BWPs may be configured to support different UE minimum bandwidth capabilities. Further, the UE should have the same minimum TX/RX bandwidth capability in the unpaired spectrum. The same UE minimum bandwidth capability may be used in DL and UL unless otherwise indicated in the paired spectrum.

### 2. Handover

When the UE is requested to change the cell through intra-cell handover or inter-cell handover, configuration information about at least one DL BWP and/or at least one UL BWP may be newly received. It is assumed that at least one DL BWP and/or at least one UL BWP are/is an activated initial DL BWP and/or an activated initial UL BWP. For configuration information about the activated initial DL BWP and/or the activated initial UL BWP, the following options may be considered.
(1) The UE may read the RMSI of the target cell to obtain configuration information about the initial DL/UL BWP. Similar to the initial access procedure, the RMSI CORESET may determine the initial DL BWP, and physical random access channel (PRACH) and/or MSG3 related configuration information may determine the initial UL BWP. Further, when the source cell transmits system information through UE specific signaling, configuration information about the initial DL/UL BWP may be transmitted to the UE. This option assumes that the initial DL/UL BWP is activated after handover.
(2) The source cell may configure a default DL/UL BWP that may be activated in the target cell after handover. Configuration information about the default DL/UL BWP may be transmitted to the UE by a source cell or a target cell. This option is particularly useful when the target cell wants to divide a load for an initial access procedure of the UE to be handed over.
   The source cell may transmit configuration information about the default DL/UL BWP to the target cell. The configuration information about the default DL/UL BWP may be *firstActiveDownlinkBWP-Id* field in a *ServingCellConfig* information element (IE). The *ServingCellConfig* IE is used for configuring (i.e., adding and/or modifying) a serving cell to the UE. The serving cell may be a special cell (SpCell) and/or SCell of a master cell group (MCG) and/or a secondary cell group (SCG).
   The *firstActiveDownlinkBWP-Id* field may include an ID of a DL BWP to be activated after performing RRC configuration (or reconfiguration) when configured for a SpCell. That is, the *firstActiveDownlinkBWP-Id* field may include information about a default DL/UL BWP that may be activated after handover with respect to the SpCell. When this field is absent, the RRC configuration (or reconfiguration) does not involve BWP switching. Alternatively, the *JirstActiveDownlinkBWP-Id* field may include an ID of a DL BWP to be used after media access control (MAC) activation of the SCell when configured for the SCell. The initial DL BWP may be indicated by BWP-Id=0. After the PCell handover and/or addition/change of the PSCell, the network may set a value of the *firstActiveDownlinkBWP-Id* field to be equal to a value of *firstActiveUplinkBWP-Id.*
(3) The first DL/UL BWP that may be activated after handover may be determined differently according to whether it is an intra-frequency handover or inter-frequency handover. In intra-frequency handover in which the source cell and the target cell share an SS/PBCH block of the same frequency, a frequency position of the first DL/UL BWP that may be activated after handover may be the same as that of the initial DL/UL BWP of the source cell. However, in the inter-frequency handover, any one of the above-described option (1) or option (2) may be used.

When intra-cell handover is performed and/or an additional carrier is configured within the wideband carrier, the RMSI or on-demand SI (OSI) may not be transmitted again in a new cell. For this purpose, a "ReferenceCellforSIB" field may be configured. When this field is configured with a cell ID and/or a frequency of the SS/PBCH block, the UE may receive SIB information from the indicated cell and/or the SS/PBCH block as it is. Further, when this field is configured, at least coarse time/frequency synchronization may also be inherited from the indicated cell and/or the SS/PBCH block. Further, this field may be used for a measurement configuration. When the measurement configuration includes information about a cell ID and/or an SS/PBCH block, for each cell and/or SS/PBCH block or for each cell and/or a set of SS/PBCH blocks, it may be indicated whether any cell and/or the SS/PBCH block may be used with SIB and/or coarse time frequency/synchronization information.

### 3. PRB Grid Configuration

When the system bandwidth supports the odd number of PRBs for particular numerology, it needs to be defined where the center of the carrier is. In particular, when the UE is configured with only one BWP and when the corresponding BWP may cover the entire system bandwidth according to a system bandwidth and/or a UE capability, a method for handling the case where the system bandwidth is the odd number of PRBs may be required. For this reason, the following options may be considered.

(1) The network may indicate an offset between a PRB 0, i.e., the point A, and the SS/PBCH to the UE. The network may indicate information on the first PRB of the carrier available to the UE and/or information on the first PRB outside the system bandwidth to the UE.

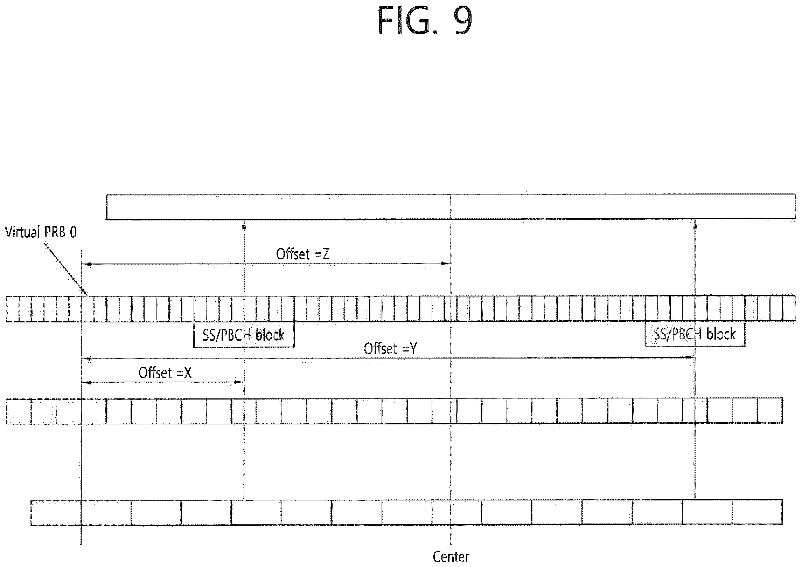

FIG. 9 shows an offset between a PRB 0 and a carrier according to an embodiment of the present disclosure. The PRB 0 may be the first PRB in which PRB grids of different numerologies are aligned. When the network configures a PRB grid as illustrated in FIG. 9, the PRB 0 is located outside the system bandwidth. Based on the offset (offset=X and/or offset=Y) between the PRB 0 and the SS/PBCH block, the UE may configure a PRB grid for given numerology.

Further, for given numerology, the UE needs to receive information on an actual bandwidth of the carrier and/or information on a bandwidth of the BWP. For example, for a numerology with the smallest subcarrier spacing, 57 PRBs from PRB 2 to PRB 58 may be indicated as offset from PRB 0, and for a numerology with the second subcarrier spacing, 29 PRBs from PRB 1 to PRB 29 may be indicated with offset from PRB 0, and for numerology with the largest subcarrier spacing, 13 PRBs from PRB 1 to PRB 13 may be indicated with offset from PRB 0. Accordingly, the UE may know a portion where the carrier actually starts.

Further, because the UE does not know whether the configured BWP is the entire system bandwidth, information on additional offset may be indicated to indicate the center of the carrier. This means offset=Z in FIG. 9. In FIG. 9, it is assumed that offset Z is offset associated with a carrier center, but offset Z may mean offset with respect to another portion of a carrier. For example, the offset Z may mean offset between PRB 0 and a first PRB of the carrier. The offset Z may be represented by the number of PRBs and/or the number of subcarriers. The offset Z may be indicated for each numerology. Alternatively, the offset Z may be configured based on numerology of the SS/PBCH block. Based on the offset Z and/or offset X/Y between the PRB 0 and the SS/PBCH block, the UE may configure the PRB grid and apply the offset Z in order to obtain a position of a center frequency of the carrier.

The center frequency of the carrier may be a direct current (DC). The offset Z may be indicated when a DC indication is needed. When signaling overhead according to the DC indication is a problem, a subcarrier 0 of PRB 0 may be used as a virtual DC frequency. Further, the offset Z may be expressed only by the number of PRBs. Further, the bandwidth of the carrier may be indicated instead of the offset Z. In particular, in a SCell configuration, the center frequency may be indicated directly and the offset between the center frequency and PRB 0 may be indicated.

The offset Z may be implemented by *offsetToCarrier* field. The *offsetToCarrier* field may indicate offset between a point A (i.e., a subcarrier 0 of a common PRB 0 of different numerologies) and the lowest subcarrier that may be used in the corresponding carrier. The offset Z may be represented by the number of PRBs. The offset Z may be configured per numerology, i.e., per subcarrier spacing. By the offset Z, a starting point of the PRB grid of the carrier that may be used by the UE for given numerology may be configured. Further, one or more DL/UL BWPs may be configured based on the configured PRB grid, and various BWP operations may be performed in the corresponding DL/UL BWPs.

In the case of UL or a receiver DC, the UE may generate a signal based on a transmitter DC (or receiver DC) at the center of the allocated BWP, or indicate the center frequency. Between two carriers where DC may be present, a smaller subcarrier index may be used as a DC tone. Further, when it is assumed that a gap between the center frequency and the SS/PBCH block is a plurality of PRBs based on numerology used in the SS/PBCH block, this may be processed by offset between a PRB grid of the SS/PBCH block and a PRB grid of another channel. However, when a sync raster is a multiple of the subcarrier spacing, separate signaling may be required. This separate signaling may be needed when the UE needs to know about a TX DC tone or when the network needs to know about the TX DC tone.

For a SCell configuration, similar methods may be used. That is, when the SCell includes a DL BWP automatically activated when the SS/PBCH block or the SCell is activated, the reference frequency may be a frequency separated from PRB 0 by the number of RBs based on numerology of the SS/PBCH block.

Alternatively, the reference frequency may follow an absolute radio frequency channel number (ARFCN), where a PRB 0 needs to be indicated as offset Z rather than offset X/Y in FIG. 9. This means that the PRB 0 includes a plurality of PRBs and/or a plurality of subcarriers based on given numerology and/or numerology of the SS/PBCH block.

When the SCell configuration is given, the following may be considered to indicate a frequency.
- A frequency of the PRB 0 may be indicated. This assumes that the channel raster is a multiple of the subcarrier. When the channel raster is not aligned with the multiple of the subcarrier, an AFRCN and additional offset may be needed to compensate for the discrepancy between the channel raster and the PRB frequency position.
- When there is an SS/PBCH block, either a lowest frequency of the SS/PBCH block or a location of the SS/PBCH block to which the UE may access for measurement may be indicated. When the SCell does not include the SS/PBCH block, a frequency position of the reference SS/PBCH block for time/frequency synchronization may be indicated.
- The center frequency of the carrier may be indicated. In this case, the UE configured with the SCell may use the indicated frequency as the DC carrier, and the UE accessed to the PCell with the same carrier may use a subcarrier 0 of the PRB 0 as the DC carrier. In this respect, a common DC carrier may be used. The subcarrier 0 of the PRB 0 may be used as a common DC carrier.

### (2) When an error occurs (or default configuration)

For example, there may be a case where the UE supports only one BWP and the network does not configure any BWP after RRC connection, SCell configuration, and/or handover. In this case, it is necessary to clearly define which BWP is an active BWP.

In the case of the PCell, an initial BWP may be used as a UE bandwidth until the UE obtains information about a system bandwidth of the carrier. When the network transmits information about the system bandwidth or when the network configures a wider bandwidth than a bandwidth in which the UE may support, the UE may support the bandwidth. However, the UE may perform transmission or monitoring only within a maximum hardware capability thereof. That is, although resource allocation, etc., may be performed based on a wide system bandwidth, it may be expected that the UE performs transmission or reception only in a part of the system bandwidth. The UE may assume that the center of the system carrier is aligned with the center frequency of the carrier configured therefor.

The BWP may be implicitly determined by a UE capability for a bandwidth. That is, the center of the initial DL BWP may be used as the carrier frequency, and the UE may determine a DL BWP according to the center of the initial DL BWP and/or the bandwidth supported by the UE in the DL. Similar schemes may be applied to UL. The maximum bandwidth based on a UE capability may be used after MSG4 is transmitted and/or after MSG3 is transmitted and/or after a message indicating a UE capability is transmitted (i.e., after the network has obtained a UE capability).

A default behavior before a default BWP configuration in the PCell may be any one of the following:
- Option 1: An initial DL BWP may be maintained until being reconfigured. Alternatively, the initial DL BWP may be maintained until being switched by scheduling DCI or a timer that instructs to return to the default BWP. Alternatively, the initial DL BWP may be maintained until being reconfigured by the default BWP.
- Option 2: The UE may extend a BWP thereof based on a UE capability. The UE may use an extended BWP as an active BWP until a plurality of BWPs are explicitly configured and one thereof is selected as the initial BWP or until a new BWP is indicated by scheduling DCI.
- Option 3: A BWP configuration may always be given after receiving MSG4. The BWP may be activated after receiving MSG4. The activated BWP may be used until the BWP is changed.

That is, after the initial DL/UL BWP (i.e., the first active BWP), the second active BWP may be determined implicitly (e.g., based on UE capability), explicitly (e.g., based on MSG4), or by the scheduling DCI.

In the case of the SCell, only the carrier frequency may be indicated in the SCell configuration. The BWP of the UE may be configured based on the carrier frequency and the maximum RF bandwidth supported by the UE. That is, the UE may implicitly configure the BWP for each UE capability based on the RF bandwidth supported thereby. This may be also applied when the UE has different capabilities in DL and UL. In this case, the BWP may be the maximum BWP. For the purpose of resource allocation and/or bandwidth definition, each of the DL/UL BWPs may be determined by [carrier frequency + DL bandwidth capability] and [carrier frequency + UL bandwidth capability]. That is, when the UE supports only one BWP, a BWP configuration may not be necessary. When the UE supports a plurality of numerologies, a plurality of BWPs may be implicitly configured according to an RF capability of the UE for each given numerology.

Further, a default bandwidth may be defined for each frequency range or frequency band. Under the assumption that the carrier frequency is the center frequency, a default bandwidth may be used for the carrier based on information about the carrier frequency.

Further, the BWP may be changed between the plurality of BWPs through the scheduling DCI. Whether the scheduling DCI may change the BWP may depend on a UE capability and/or a network configuration. When the network configures a field related to a BWP index in the DCI, this means that the BWP may be changed by the scheduling DCI. When the UE does not support BWP change, the UE may expect that a corresponding configuration may not to be supported. When BWP change through the scheduling DCI is supported, the following options may be considered.
- All BWPs including the initial DL/UL BWP and the default BWP may be indicated by the scheduling DCI. An index of the initial DL/UL BWP may be 0, and an index of the default BWP may be 1. The remaining BWPs may have different indices. For example, a PDCCH order that triggers a PRACH may indicate a PRACH resource (e.g., UL BWP) and a DL BWP (for random access response (RAR)).
- Only the default BWP and the configured BWP may be indicated by the scheduling DCI, and the initial DL/UL BWP may be used only in an RRC_IDLE state. When the UE is changed to an RRC_IDLE state, the UE may return to the initial DL/UL BWP and monitor paging based on the configuration.
- The set of BWPs that may be changed/indicated by the scheduling DCI may be implicitly and/or explicitly configured from all configured BWPs (including the initial DL/UL BWP and the basic BWP).

When changing the BWP by the scheduling DCI, alignment of the resource allocation field needs to be considered.

When changing the BWP by the scheduling DCI, the following options may be further considered.
- The scheduling DCI may immediately change the active BWP for the scheduled PDSCH and/or the scheduled PUSCH. In this case, a change delay may be necessary by a PDCCH-PDSCH delay and/or a PDCCH-PUSCH delay. If the change delay is less than the required delay, transmission or reception may be omitted for several OFDM symbols.
- Scheduling DCI may change the active BWP from next scheduling. That is, the new BWP is valid from next scheduling.
- Different operations may be performed according to the DL/UL or DCI format. For example, the scheduling DCI may immediately change the active BWP for the scheduled PDSCH and/or the scheduled PUSCH, and the dedicated DCI may change the active BWP from next scheduling.

In the case of FDD, it may be difficult to deal with UE hardware because DL and UL are not far apart. In this case, a maximum duplex gap between the center frequency of DL and the center frequency of UL may be considered. For example, a fixed duplex gap may be configured, where the UL BWP of the UE should be in the range of [center frequency of DL BWP + fixed duplex gap + UL TX RF capability of UE]. That is, the range of the UL BWP configuration may be limited to a specific range in which the UE may use DL frequency synchronization for UL frequency switching.

When the UE supports a plurality of duplex gaps instead of a fixed duplex gap and/or supports a range in which a duplex gap may be configured, a plurality of values may be used or a range of values may be used for the duplex gap. For example, the UL BWP of the UE should be in a range from [center frequency of DL BWP + smallest duplex gap + UL TX RF capability of UE] to [center frequency of DL BWP + largest duplex gap + UL TX RF capability of UE]. That is, the range of the frequency domain of the UL BWP may be limited by the capability of the UE.

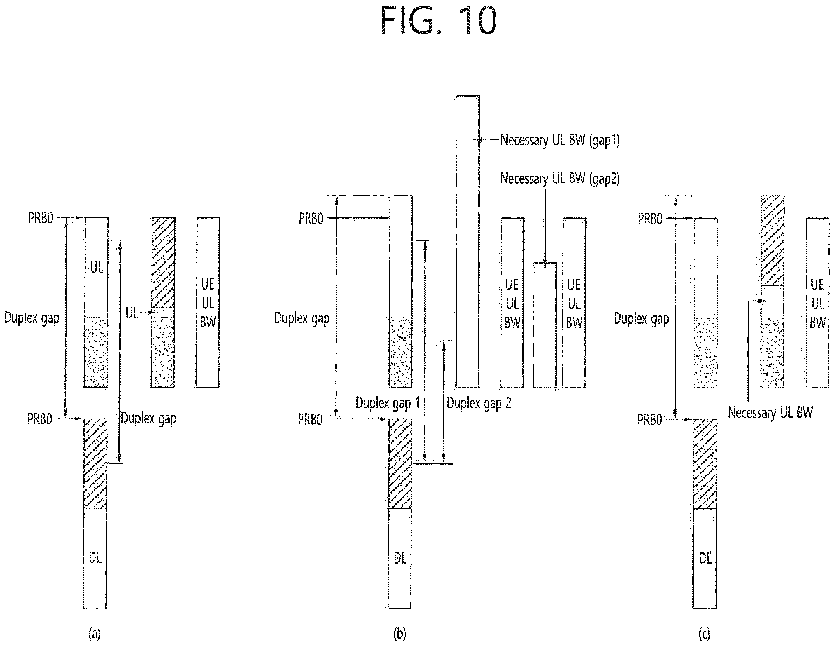

FIG. 10 shows an example of a configuration of a duplex gap according to an embodiment of the present disclosure.

In FIG. 10-(a), a fixed duplex gap or a set of duplex gaps for each configured DL BWP may be configured, and the UL BWP may be configured based on a UE capability. In this case, the duplex gap may be changed according to a configuration of a DL/UL bandwidth and/or a PRB 0 for DL/UL.

In FIG. 10-(b), a set of PRBs for a DL BWP and a set of PRBs for a UL BWP may be included in the maximum PRB in which the UE may support by a capability. A duplex gap may be obtained for a UE based on a PRB 0 for DL and/or UL, and the DL/UL BWP should be within a capability of the UE. This option defines a flexible duplex gap based on the PRB 0 configuration. In this case, the UL BWP may be considered as valid when [fixed duplex gap + center frequency of DL BWP + configured bandwidth] is at the center and when the entire bandwidth is within a capability of the UE.

FIG. 10-(c) is a hybrid option of FIGS. 10-(a) and 10-(b). That is, the UE uses a fixed duplex gap, and the set of PRBs does not exceed a UL capability of the UE. In this case, the set of PRBs may include a PRB having a negative PRB index beyond a PRB 0 when considering a fixed duplex gap.

Pairing between the DL BWP and the UL BWP may also be considered in the paired spectrum. In this case, the DL BWP and the UL BWP may be defined such that a fixed duplex gap is configured between the DL BWP and the UL BWP. That is, centers of the DL BWP and the UL BWP in the paired spectrum may be separated by a fixed duplex gap, similarly to an unpaired spectrum in which centers of the DL BWP and the UL BWP are the same.

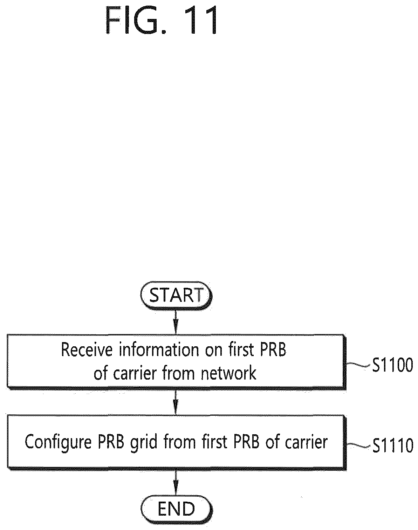

FIG. 11 shows a method for a UE to configure a PRB grid according to an embodiment of the present disclosure. The present disclosure described above at the UE side may be applied to this embodiment.

In step S1100, the UE receives information on a first PRB of a carrier from a network. The information on the first PRB of the carrier may include information on an offset with a PRB 0. The PRB 0 may be the first PRB in which PRB grids of different numerologies are aligned. The information on the first PRB of the carrier may be received for each numerology. The information on the first PRB of the carrier may be represented by the number of PRBs and/or the number of subcarriers. The information on the first PRB of the carrier may be based on numerology of the SS/PBCH block. The carrier may include the odd number of PRBs. The information on the first PRB of the carrier may include information on an offset between the PRB 0 and the SS/PBCH block.

In step S1110, the UE may configure the PRB grid from the first PRB of the carrier.

Further, the UE may receive information on an offset between the center frequency of the carrier and the PRB 0. The UE may obtain a position of the center frequency of the carrier based on the information on the offset between the center frequency of the carrier and the PRB 0.

According to an embodiment of the present disclosure described in FIG. 11, the UE may receive information on a first PRB of a carrier available to the UE to configure a PRB grid. Specifically, the UE may receive information on an offset with the PRB 0 to configure a PRB grid for the carrier. As a result, the UE may perform various BWP operations within a carrier configured with a PRB grid.

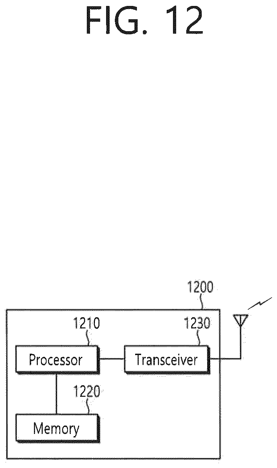

FIG. 12 shows a UE in which an embodiment of the present disclosure is implemented. The present disclosure described above at the UE side may be applied to this embodiment.

An UE 1200 includes a processor 1210, a memory 1220, and a transceiver 1230. The processor 1210 may be configured to implement the functions, processes, and/or methods described in the present disclosure. Layers of a wireless interface protocol may be implemented in the processor 1210. More specifically, the processor 1210 controls the transceiver 1230 to receive information on a first PRB of a carrier from the network. The information on the first PRB of the carrier may include information on an offset with a PRB 0. The PRB 0 may be the first PRB in which PRB grids of different numerologies are aligned. The information on the first PRB of the carrier may be received for each numerology. The information on the first PRB of the carrier may be represented by the number of PRBs and/or the number of subcarriers. The information on the first PRB of the carrier may be based on numerology of the SS/PBCH block. The carrier may include the odd number of PRBs. The information on the first PRB of the carrier may include information on an offset between the PRB 0 and the SS/PBCH block. Further, the processor 1210 configures the PRB grid from the first PRB of the carrier.

The memory 1220 is connected to the processor 1210 to store various information for driving the processor 1210. The transceiver 1230 is connected to the processor 1210 to transmit and/or receive a radio signal.

The processor 1210 may include an application-specific integrated circuit (ASIC), another chipset, a logic circuit, and/or a data processing device. The memory 1220 may include a read-only memory (ROM), a random access memory (RAM), a flash memory, a memory card, a storage medium, and/or other storage device. The transceiver 1230 may include a baseband circuit for processing radio frequency signals. When the embodiment is implemented in software, the above-described technique may be implemented into a module (process, function, etc.) for performing the above-described function. The module may be stored in the memory 1220 and be executed by the processor 1210. The memory 1220 may be inside or outside the processor 1210 and be connected to the processor 1210 by various well-known means.

According to an embodiment of the present disclosure described in FIG. 12, the processor 1210 controls the transceiver 1230 to receive information on a first PRB of a carrier available to the UE 1200, thereby configuring a PRB grid. Specifically, the processor 1210 may control the transceiver 1230 to receive information on an offset with a PRB 0, thereby configuring a PRB grid for the carrier. As a result, the UE 1200 may perform various BWP operations within a carrier configured with a PRB grid.

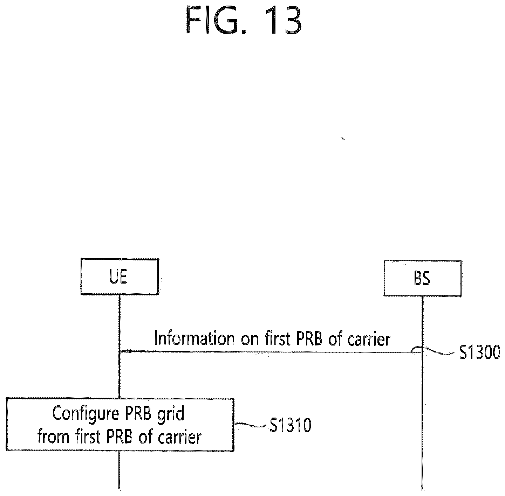

FIG. 13 shows a method for a BS and a UE to operate according to an embodiment of the present disclosure. The present disclosure described above at the BS/UE side may be applied to this embodiment.

In step S1300, the BS transmits information on a first PRB of the carrier to the UE. The information on the first PRB of the carrier may include information on an offset with a PRB 0. The PRB 0 may be a first PRB in which PRB grids of different numerologies are aligned. The information on the first PRB of the carrier may be transmitted for each numerology. The information on the first PRB of the carrier may be represented by the number of PRBs and/or the number of subcarriers. The information on the first PRB of the carrier may be based on numerology of the SS/PBCH block. The carrier may include the odd number of PRBs. The information on the first PRB of the carrier may include information on an offset between the PRB 0 and the SS/PBCH block.

In step S1310, the UE may configure the PRB grid from the first PRB of the carrier.

Further, the BS may transmit information on an offset between the center frequency of the carrier and the PRB 0 to the UE. The UE may obtain a position of the center frequency of the carrier based on the information on the offset between the center frequency of the carrier and the PRB 0.

According to an embodiment of the present disclosure described in FIG. 13, by transmitting information on a first PRB of a carrier available to the UE to the UE, the BS may help the UE to configure a PRB grid. Specifically, the BS may transmit information on an offset with the PRB 0 to the UE, and the UE may configure a PRB grid for the carrier based on the information. As a result, the UE may perform various BWP operations within a carrier configured with a PRB grid.

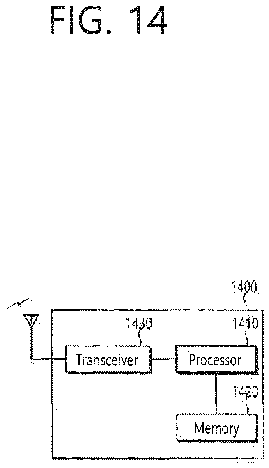

FIG. 14 shows a BS in which an embodiment of the present disclosure is implemented. The present disclosure described above at the BS side may be applied to this embodiment.

A BS 1400 includes a processor 1410, a memory 1420, and a transceiver 1430. The processor 1410 may be configured to implement the functions, processes, and/or methods described in the present disclosure. Layers of a wireless interface protocol maybe implemented within the processor 1410. More specifically, the processor 1410 controls the transceiver 1430 to transmit information on a first PRB of the carrier to the UE. The information on the first PRB of the carrier may include information on an offset with a PRB 0. The PRB 0 may be a first PRB in which PRB grids of different numerologies are aligned. The information on the first PRB of the carrier may be received for each numerology. The information on the first PRB of the carrier may be represented by the number of PRBs and/or the number of subcarriers. The information on the first PRB of the carrier may be based on numerology of the SS/PBCH block. The carrier may include the odd number of PRBs. The information on the first PRB of the carrier may include information on an offset between the PRB 0 and the SS/PBCH block.

The memory 1420 is connected to the processor 1410 to store various information for driving the processor 1410. The transceiver 1430 is connected to the processor 1410 to transmit and/or receive a radio signal.

The processor 1410 may include an ASIC, another chipset, a logic circuit, and/or a data processing device. The memory 1420 may include a ROM, a RAM, a flash memory, a memory card, a storage medium, and/or other storage device. The transceiver 1430 may include a baseband circuit for processing radio frequency signals. When the embodiment is implemented in software, the above-described technique may be implemented with a module (process, function, etc.) for performing the above-described function. The module may be stored in the memory 1420 and be executed by the processor 1410. The memory 1420 maybe inside or outside the processor 1410 and be connected to the processor 1410 by various well-known means.

According to an embodiment of the present disclosure described in FIG. 14, the processor 1410 controls the transceiver 1430 to transmit information on a first PRB of a carrier available to the UE to the UE, thereby helping the UE to configure the PRB grid. Specifically, the processor 1410 may control the transceiver 1430 to transmit information on an offset with the PRB 0 to the UE, and the UE may configure a PRB grid for the carrier based on the information. As a result, the UE may perform various BWP operations within a carrier configured with the PRB grid.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method for a user equipment (UE) to configure a physical resource block (PRB) grid in a wireless communication system, the method comprising:
receiving information on a first PRB of a carrier from a network; and
configuring the PRB grid from the first PRB of the carrier.

2. The method of claim 1, wherein the information on the first PRB of the carrier comprises information on an offset with a PRB 0.

3. The method of claim 2, wherein the PRB 0 is a first PRB in which PRB grids of different numerologies are aligned.

4. The method of claim 1, wherein the information on the first PRB of the carrier is received for each numerology.

5. The method of claim 1, wherein the information on the first PRB of the carrier is represented by a number of PRBs and/or a number of subcarriers.

6. The method of claim 1, wherein the information on the first PRB of the carrier is based on a numerology of a synchronization signal (SS)/physical broadcast channel (PBCH) block.

7. The method of claim 1, wherein the carrier comprises an odd number of PRBs.

8. The method of claim 1, wherein the information on the first PRB of the carrier comprises information on an offset between a PRB 0 and an SS/PBCH block.

9. The method of claim 1, further comprising receiving information on an offset between a center frequency of the carrier and a PRB 0.

10. The method of claim 9, further comprising obtaining a position of the center frequency of the carrier based on the information on the offset between the center frequency of the carrier and the PRB 0.

11. A user equipment (UE) in a wireless communication system, the UE comprising:
a memory;
a transceiver; and
a processor connected to the memory and the transceiver, and configured to:
receive information on a first PRB of a carrier from a network; and
configure the PRB grid from the first PRB of the carrier.

12. The UE of claim 11, wherein the information on the first PRB of the carrier comprises information on an offset with a PRB 0.

13. The UE of claim 12, wherein the PRB 0 is a first PRB in which PRB grids of different numerologies are aligned.

14. The UE of claim 11, wherein the information on the first PRB of the carrier is received for each numerology.

15. The UE of claim 11, wherein the information on the first PRB of the carrier is represented by a number of PRBs and/or a number of subcarriers.
